# EUROPÄISCHE PATENTSCHRIFT

(11) **EP 4 365 539 B1**
(45) Veröffentlichungstag und Bekanntmachung des Hinweises auf die Patenterteilung: **20.05.2026**
(21) Anmeldenummer: 22205389.4
(22) Anmeldetag: 03.11.2022
(51) Int. Cl.: G01B 11/24

(54) **KOORDINATENMESSMASCHINE UND VERFAHREN ZUM BETREIBEN DIESER KOORDINATENMESSMASCHINE**
COORDINATE MEASURING MACHINE AND METHOD FOR OPERATING SAID COORDINATE MEASURING MACHINE
MACHINE DE MESURE DE COORDONNÉES ET PROCÉDÉ POUR FAIRE FONCTIONNER CETTE MACHINE DE MESURE DE COORDONNÉES

(43) Veröffentlichungstag der Anmeldung: 08.05.2024
(73) Patentinhaber: Klingelnberg GmbH, 42499 Hückeswagen (DE)
(72) Erfinder: Stefer, Jonas, 51588 Wipperfürth (DE); Finkeldey, Markus, 45527 Hattingen (DE)
(74) Vertreter: Janke Scholl Patentanwälte PartG mbB

(56) Entgegenhaltungen:
- EP-A1- 3 786 573
- US-A1- 2011 242 496
- US-A1- 2020 378 747

## Beschreibung

Die vorliegende Erfindung betrifft eine Koordinatenmessmaschine. Die Erfindung betrifft weiter ein Verfahren zum Betreiben der Koordinatenmessmaschine.

Koordinatenmessmaschinen werden in der Verzahnungsmesstechnik eingesetzt, um vor oder zwischen Fertigungsschritten Abweichungen einer zu fertigenden Verzahnung von einer vorgegebenen Soll-Geometrie zu bestimmen oder um die Qualität einer gefertigten Verzahnung zu bestimmen.

Koordinatenmessmaschinen, die in der Verzahnungsmesstechnik eingesetzt werden, unterscheiden sich häufig dadurch von konventionellen Koordinatenmessmaschinen in Portalbauweise, dass sie zentral um eine Rotationstisch bzw. eine Rotationsachse aufgebaut sind. Der Rotationstisch dient dazu, die zu messende Verzahnung aufzunehmen und die zu messende Verzahnung während der Messung um ihre eigene Achse zu rotieren.

In der Verzahnungsmesstechnik erreichen bisher taktile Messsysteme die höchste Messgenauigkeit. Derartige taktile Messsysteme weisen beispielsweise einen Messtaster auf, der einen Schaft mit einer endseitig an diesem Schaft befestigten Tastkugel aufweist. Zum taktilen Messen der Geometrie einer Verzahnung wird der Messtaster in eine Zahnlücke bewegt und mit einer Zahnflanke der Verzahnung in Anlage gebracht. Der Messtaster kann in Anlage mit der Zahnflanke in Profil- und/oder Flankenrichtung bewegt werden, um eine Mehrzahl von Messpunkten zu erfassen oder es können Einzelmesspunkte angefahren und durch Antasten bestimmt werden. Nach dem Messen bzw. Antasten der betreffenden Flanken einer Zahnlücke wird der Messtaster zurückgezogen, d.h. aus der Zahnlücke bewegt, und in die nächste zu messende Zahnlücke eingefädelt. Es ist ersichtlich, dass die Geschwindigkeit einer taktilen Messung aufgrund des erforderlichen physischen Kontakts zwischen dem Messtaster und der Verzahnung begrenzt ist.

Seit einigen Jahren ist die berührungslose, optische Messtechnik häufig nicht nur in der allgemeinen Koordinatenmesstechnik, sondern auch in dem spezielleren Gebiet der Verzahnungsmesstechnik zu finden. Ein Grund für den Einsatz der optischen Messtechnik ist die reduzierte Messzeit bei vergleichbarer Qualität der Messdaten.

EP 3 786 573 A1 offenbart eine Koordinatenmessmaschine zur Vermessung einer Verzahnung mit einem konfokalen chromatischen Abstandssensor, wobei dieser Abstandssensor eine Lichtquelle aufweist, die eine Phosphorschicht und einen Laser zum Anregen der Phosphorschicht zur Emission eines breitbandigen Lichts umfasst.

Die optische Messung von Verzahnungen stellt aufgrund der Geometrie der Verzahnungen und der Beschaffenheit der zu messenden Oberflächen eine besondere Herausforderung dar. Denn aufgrund der Neigung und wechselseitigen Abschattung der Zähne können häufig keine optimalen Antastwinkel für die optische Messung erreicht werden. Weiter erschwert die hohe Reflektivität der Zahnflanken die optische Messung. In produktionsnahen Messungen können zudem Verschmutzungen, Vibrationen und Temperaturänderungen die Funktion eines optischen Messsystems einschränken. Herausfordernd für die optische Verzahnungsmesstechnik ist daher, die in der Verzahnungsmesstechnik gestellten hohen Anforderungen sowohl an die Absolutgenauigkeit als auch an die Reproduzierbarkeit zu erfüllen.

Die Fähigkeit eines optischen Messsystems, eine gewisse Menge Licht innerhalb eines bestimmten Zeitintervalls auszuwerten, lässt einen Rückschluss darauf zu, welche Genauigkeit in einer vorgegebenen Zeitspanne mittels optischer Messung erreicht werden kann - d.h. wie schnell das optische Messsystem arbeitet bzw. arbeiten kann. Denn der Messzeitgewinn, d.h. die Reduktion der Messzeit im Vergleich zu taktilen Systemen, ist eine zentrale Vorgabe, um den Einsatz optischer Messsysteme gegenüber taktilen Systemen zu rechtfertigen.

Für die Fähigkeit eines optischen Messsystems, eine gewisse Menge Licht innerhalb eines bestimmten Zeitintervalls auszuwerten, ist es unter anderem wichtig, dass das Signal-Rausch-Verhältnis ausreichend hoch ist. Weiter ist die Qualität der optischen Messung abhängig von den Eigenschaften optischer Komponenten eines Sensorkopfes des optischen Messsystems, wie der numerischen Apertur oder der Transmission, und den sonstigen Transmissionseigenschaften der verwendeten Komponenten, sowie von der Effizienz des Detektors, d.h. der Quanteneffizienz bei CMOS oder CCD basierten Detektoren.

Ein weiterer entscheidender Faktor für Qualität eines optischen Messsystems ist die Qualität der verwendeten Lichtquelle, die sich z.B. anhand der Stärke, Bandbreite, Stabilität und spektralen Homogenität der betreffenden Lichtquelle beurteilen lässt. Dies gilt insbesondere in der Verzahnungsmesstechnik, da die Bauteile nicht speziell für die Messung präpariert werden können, z.B. durch den Einsatz von Kreidespray oder dergleichen.

Vor diesem Hintergrund liegt der vorliegenden Erfindung die technische Problemstellung zugrunde, eine Koordinatenmessmaschine anzugeben, die eine verbesserte optische Messung von Verzahnungen ermöglicht.

Die voranstehend beschriebene technische Problemstellung wird durch die unabhängigen Ansprüche gelöst. Weitere Ausgestaltungen und Weiterbildungen der Erfindung ergeben sich aus den abhängigen Ansprüchen und der nachstehenden Beschreibung.

Erfindungsgemäß wird eine Koordinatenmessmaschine angegeben, mit zwei oder mehr Linearachsen, mit mindestens einer Rotationsachse, mit einem optischen Abstandssensor zum Erfassen von Messpunkten an einem zu messenden Werkstück und mit einer Lichtquelle, wobei die Linearachsen und die Rotationsachse zum Ausführen von Relativbewegungen zwischen dem zu messenden Werkstück und dem optischen Abstandssensor eingerichtet sind, wobei die Lichtquelle zum Bereitstellen von Quelllicht für den optischen Abstandssensor eingerichtet ist und wobei die Lichtquelle aufweist: ein auf einer Trägerplatine aufgebrachtes Leuchtmittel, das ein Material aufweist, das unter Anregung breitbandiges Licht emittiert, wie Phosphor oder dergleichen, einen Laser zum Anregen des Leuchtmittels mittels Laserlicht, eine Einrichtung zur aktiven Regelung der Lichtstärke des von der Lichtquelle erzeugten Quelllichts, eine Einrichtung zur aktiven Regelung einer Temperatur innerhalb der Lichtquelle, eine Optik und einen Lichtleiter, wobei die Optik zum Fokussieren des Quelllichts in den Lichtleiter eingerichtet ist und wobei der Lichtleiter mit dem optischen Abstandssensor gekoppelt ist.

Es hat sich gezeigt, dass sich durch die Kombination einer aktiven Regelung der Temperatur mit einer aktiven Regelung der Lichtstärke eine besonders stabile, breitbandige und spektral homogene Lichtquelle angeben lässt, die für eine Verzahnungsmessung mit einem optischen Abstandssensor besonders gut geeignet ist. So kann insgesamt eine verbesserte Koordinatenmessmaschine zur optischen Verzahnungsmessung angegeben werden.

Der Lichtleiter kann eine Glasfaser sein.

Der Lichtleiter kann einen Kerndurchmesser von 50 Mikrometer (µm) aufweisen.

Der Lichtleiter kann einen Kerndurchmesser von 25 Mikrometer (µm) aufweisen.

Das Quelllicht kann von dem Leuchtmittel emittiertes Licht und Laserlicht aufweist. Das Quelllicht kann daher aus einer Kombination von Laserlicht, das zum Anregen des Leuchtmittels verwendet wird, und emittiertem Licht bestehen. Aus diesem Grund wird im vorliegenden Text zwischen "Quelllicht", "emittiertem Licht" und "Laserlicht" unterschieden.

Das Quelllicht ist dasjenige Licht, dass von der Lichtquelle erzeugt und in den Lichtleiter eingebracht wird, um es dem optischen Abstandssensor zuzuführen.

Das emittierte Licht entsteht durch die Anregung des Leuchtmittels bzw. den Energieeintrag des Laserlichts in das Leuchtmittel.

Das Laserlicht kann auch als Pumplicht bezeichnet werden und wird von dem Laser erzeugt.

Während das Laserlicht eine spezifische Wellenlänge aufweisen kann, ist das emittierte Licht insbesondere breitbandig und weist einen im Vergleich zum Laserlicht größeren Wellenlängenbereich auf.

Die Wellenlänge des Laserlichts kann sich von dem Wellenlängenbereich des emittierten Lichts unterscheiden, so dass die Wellenlänge des Laserlichts nicht im Spektrum des von dem Leuchtmittel emittierten Lichts liegt.

Es kann vorgesehen sein, dass das Quelllicht von dem Leuchtmittel emittiertes Licht und kein Laserlicht aufweist. Dies kann beispielsweise dadurch erreicht werden, dass ein dem Eingang des Lichtleiters vorgeschalteter Filter das Laserlicht bzw. Pumplicht im Wesentlichen vollständig herausfiltert.

Nach einer Ausgestaltung der Koordinatenmessmaschine kann vorgesehen sein, dass die Einrichtung zur aktiven Regelung der Temperatur eine Heizeinrichtung aufweist, wie ein Widerstandsheizelement, ein thermoelektrisches Element oder dergleichen.

Die Einrichtung zur aktiven Regelung der Temperatur kann eine Kühleinrichtung aufweisen.

Die Einrichtung zur aktiven Regelung der Temperatur kann eine aktive Kühleinrichtung aufweisen, wie einen Kühlkreislauf mit einem Kühlmedium, einen Lüfter oder dergleichen.

Alternativ oder ergänzend kann die Einrichtung zur aktiven Regelung der Temperatur eine passive Kühleinrichtung aufweisen, wie Kühllamellen oder dergleichen.

Es kann vorgesehen sein, dass die Einrichtung zur aktiven Regelung der Temperatur zur Regelung der Temperatur der Trägerplatine eingerichtet ist. Die Trägerplatine dient dabei als thermisches Interface zur Regelung der Temperatur des Leuchtmittels, so dass die Temperatur des Leuchtmittels mittelbar über die Trägerplatine geregelt werden kann.

Es kann vorgesehen sein, dass die Heizeinrichtung, insbesondere das thermoelektrische Element, mit der Trägerplatine gekoppelt ist. Es kann vorgesehen sein, dass die, Heizeinrichtung, insbesondere das thermoelektrische Element, in die Trägerplatine integriert ist.

Es kann vorgesehen sein, dass die aktive Kühleinrichtung mit der Trägerplatine gekoppelt ist. Es kann vorgesehen sein, dass die aktive Kühleinrichtung in die Trägerplatine integriert ist. Soweit ein Lüfter vorgesehen ist, kann dieser dazu eingerichtet sein, die Trägerplatine mit Kühlluft anzuströmen.

Es kann vorgesehen sein, dass die Trägerplatine mit der passiven Kühleinrichtung gekoppelt ist. Es kann vorgesehen sein, dass die Trägerplatine die passive Kühleinrichtung aufweist.

Die Einrichtung zur aktiven Regelung der Temperatur kann ein thermoelektrisches Element aufweisen, das eine Heizeinrichtung und eine Kühleinrichtung ist, wie ein Peltier-Element oder dergleichen. So kann beispielsweise eine vorgegebene SollTemperatur eingestellt werden, die, je nach Betriebs- und Umgebungsbedingungen, durch einen Heiz- oder einen Kühlbetrieb des thermoelektrischen Elements eingestellt wird.

Die Optik kann zwei Linsen aufweisen, insbesondere zwei asphärische Linsen aufweist. Die Optik kann genau zwei asphärische Linsen aufweisen.

Die Optik kann mehr als zwei Linsen aufweisen. Die Optik kann sphärische und/oder asphärische Linsen aufweisen.

Die Optik kann ein Filterelement aufweisen, wobei das Filterelement insbesondere ein Langpassfilter ist, wobei der Langpassfilter insbesondere durchlässig für Wellenlängen größer 475 Nanometer (nm) ist.

Das Filterelement kann zwischen den Linsen angeordnet sein.

Die Lichtquelle kann einen weiteren Laser zum Anregen des Leuchtmittels mittels Laserlicht aufweisen. Insbesondere kann die Lichtquelle genau zwei Laser zum Anregen des Leuchtmittels mittels Laserlicht aufweisen.

Die Lichtquelle kann einen Lichtsensor zum Messen einer Lichtstärke des erzeugten Quelllichts aufweisen, wie eine Photodiode oder dergleichen.

Der Lichtsensor kann zwischen den Linsen angeordnet sein.

Insbesondere kann die Einrichtung zur aktiven Regelung der Lichtstärke mit dem Lichtsensor verbunden sein und dazu eingerichtet sein, eine Anregung des Leuchtmittels durch Laserlicht anhand der mittels des Lichtsensors gemessenen Lichtstärke zu regeln. Insbesondere kann eine Leistung bzw. ein Strom des Lasers mittels der Einrichtung zur aktiven Regelung der Lichtstärke geregelt werden, um den Energieeintrag in das Leuchtmittel zu regeln und damit die Lichtstärke anzupassen. Die Einrichtung zur aktiven Regelung der Lichtstärke dient daher zur Regelung des Lasers bzw. der Laser.

Es können zwei oder mehr Lichtsensoren vorgesehen sein.

Das Laserlicht kann eine Wellenlänge aufweisen, die kleiner als 500 Nanometer (nm) ist. Das Laserlicht kann insbesondere eine Wellenlänge aufweisen, die 450 Nanometer (nm) beträgt.

Die Lichtquelle kann einen Temperatursensor zum Messen einer Temperatur aufweisen, insbesondere zum Messen der Temperatur des Leuchtmittels und/oder der Trägerplatine und/oder des Lasers aufweisen.

Die Einrichtung zur aktiven Regelung der Temperatur kann mit dem Temperatursensor verbunden sein und dazu eingerichtet sein, ein aktives Erwärmen und/oder ein aktives Kühlen des Leuchtmittels und/oder der Trägerplatine und/oder des Lasers anhand der mittels des Temperatursensors gemessenen Temperatur zu regeln.

Es können zwei oder mehr Temperatursensoren vorgesehen sein.

Der Lichtleiter kann lösbar und austauschbar an einem die Optik aufnehmenden Gehäuse befestigt sein, insbesondere mittels einer Steckverbindung an dem Gehäuse befestigt sein.

Die Optik kann relativ zu dem Leuchtmittel verschiebbar sein, insbesondere in einer Richtung quer zu einer optischen Achse der Optik verschiebbar sein. Auf diese Weise kann die Optik derart relativ zum Leuchtmittel positioniert werden, dass eine maximale Lichtausbeute erreicht wird, d.h. ein möglichst großer Anteil des durch Anregung des Leuchtmittel erzeugten Lichts mittels der Optik in den Lichtleiter geführt werden kann.

Die Lichtquelle kann eine mechanische Stelleinrichtung zum Einstellen einer relativen Position zwischen der Optik und dem Leuchtmittel aufweisen. So kann eine relative Position zwischen der Optik und dem Leuchtmittel in einfacher Weise eingestellt und fixiert werden.

Die mechanische Stelleinrichtung kann zwei oder mehr Mikrometerschrauben aufweisen. Mikrometerschrauben erlauben in einfacher Weise eine präzise Feineinstellung der relativen Lage der Optik zum Leuchtmittel.

Es kann vorgesehen sein, dass mindestens eine erste Mikrometerschraube der zwei oder mehr Mikrometerschrauben zum Einstellen einer relativen Position zwischen der Optik und dem Leuchtmittel in einer ersten Richtung eingerichtet ist, mindestens eine zweite Mikrometerschraube der zwei oder mehr Mikrometerschrauben zum Einstellen einer relativen Position zwischen der Optik und dem Leuchtmittel in einer zweiten Richtung eingerichtet ist und die erste Richtung insbesondere orthogonal zur zweiten Richtung orientiert ist. So kann beispielsweise eine Einstellung der Relativposition in einer Planebene erfolgen, die orthogonal zur optischen Achse der Optik orientiert ist, wobei entlang der ersten Richtung eine erste translatorische Verschiebung der Optik relativ zum Leuchtmittel erfolgen kann und wobei entlang der zweiten Richtung eine zweite translatorische Verschiebung der Optik relativ zum Leuchtmittel erfolgen kann.

Die Lichtquelle kann eine Einrichtung zur Fokuseinstellung der Optik aufweisen, wobei die Einrichtung zur Fokuseinstellung insbesondere mechanisch ausgestaltet ist und ein Einstellgewinde aufweist, wobei das Einstellgewinde dazu eingerichtet ist, eine Rotation in eine translatorische Fokusverschiebung umzusetzen, insbesondere in eine translatorische Fokusverschiebung entlang der optischen Achse der Optik umzusetzen.

Die Koordinatenmessmaschine kann einen Zähler zum Zählen von aktiven Betriebsstunden der Lichtquelle aufweisen. So kann ein Verschleißzustand des Leuchtmittels, des Lasers bzw. der Laser und weiterer Komponenten anhand der Betriebsstunden ermittelt werden.

Es kann vorgesehen sein, dass die Lichtquelle eine breitbandige Weißlichtquelle ist, wobei die Lichtquelle dazu eingerichtet ist, Quelllicht mit einer Bandbreite von mehr als 20 Nanometer (nm) zu erzeugen und wobei die Lichtquelle dazu eingerichtet ist, Wellenlängen größer 400 Nanometer (nm) und kleiner 700 Nanometer (nm) zu erzeugen.

Der Abstandssensor kann ein konfokal chromatischer Abstandssensor sein.

Der optische Abstandssensor kann ein Punktsensor zur optischen Abstandsmessung sein. Insbesondere können durch den Punktsensor einzelne Messpunkte nacheinander gemessen werden. Jeder einzelne Messpunkt kann unabhängig und separat von weiteren Messpunkten mittels des Punktsensors erfassbar sein. D.h. mittels des Punktsensors kann es insbesondere möglich sein, einen einzelnen Messpunkt zu erfassen, ohne gleichzeitig weitere Messpunkte zu erfassen. Jedem einzelnen Messpunkt können drei Raumkoordinaten zugeordnet sein, und zwar z.B. ein x-Wert, ein y-Wert und ein z-Wert in einem kartesischen Koordinatensystem x-y-z.

Es kann vorgesehen sein, dass ein Fokusdurchmesser des optischen Abstandssensors 50 Mikrometer oder weniger beträgt, insbesondere 20 Mikrometer oder weniger beträgt.

Es kann vorgesehen sein, dass der Punktsensor zur optischen Abstandsmessung eine Tiefenauflösung aufweist.

Beispielsweise kann, entlang einer optischen Achse des Punktsensors betrachtet, in einem Tiefenmessbereich entlang der optischen Achse eine Tiefe, d.h. ein Abstand der optisch angetasteten Oberfläche bzw. Zahnflanke entlang der optischen Achse in einem vorgegebenen Koordinatensystem gemessen werden - z.B. ein Abstand zu einem Ursprung des vorgegebenen Koordinatensystems oder zu einer anderen geometrischen Referenz, wie der Position einer Linse oder dergleichen. Es kann vorgehen sein, dass die Abstandsmessung eindimensional entlang einer optischen Achse erfolgt und dreidimensionale Messwerte anhand der Position des optischen Messsystems errechnet werden.

Beispielsweise kann, entlang einer optischen Achse des Punktsensors betrachtet, in einem Tiefenmessbereich von wenigen Zentimetern oder wenigen Millimetern oder in einem Tiefenmessbereich von weniger als einem Millimeter entlang der optischen Achse eine Tiefe, d.h. ein Abstand der optisch angetasteten Oberfläche bzw. Zahnflanke entlang der optischen Achse in einem vorgegebenen Koordinatensystem gemessen werden - z.B. ein Abstand zu einem Ursprung des vorgegebenen Koordinatensystems oder zu einer anderen geometrischen Referenz, wie der Position einer Linse oder dergleichen. Anhand der Abstandsinformation des Punktsensors kann insbesondere ein dreidimensionaler Messpunkt erzeugt werden, wobei Informationen zu Achspositionen der Koordinatenmessmaschine berücksichtigt werden können, die den optischen Punktsensor trägt. Es kann vorgehen sein, dass die Abstandsmessung eindimensional entlang einer optischen Achse erfolgt und dreidimensionale Messwerte anhand der Position des optischen Abstandssensors errechnet werden.

Es kann vorgesehen sein, dass die Koordinatenmessmaschine zwei oder mehr Punktsensoren zur optischen Abstandsmessung aufweist.

Es kann vorgesehen sein, dass Punktsensoren entlang einer Linie aufgereiht oder gitterartig verteilt in Zeilen und Spalten angeordnet sind. Jeder der Punktsensoren ist daher insbesondere in voranstehend beschriebener Weise zur optischen Abstandsmessung eingerichtet und weist insbesondere einen Tiefenmessbereich mit einer Tiefenauflösung entlang einer optischen Achse auf. Die Punktsensoren können gleichzeitig Messwerte erfassen.

Die Koordinatenmessmaschine weist insbesondere keine Kamera zur optischen Messung einer Werkstückgeometrie auf. Die Koordinatenmessmaschine weist insbesondere keine Kamera zur zweidimensionalen Bildgebung auf.

Es kann vorgesehen sein, dass insbesondere keine Kamera zur Erfassung von Messpunkten durch Bild- oder Pixelanalyse vorgesehen ist. Es kann insbesondere vorgehen sein, dass keine Kamera zur zweidimensionalen Bildgebung zur Erfassung von Messpunkten durch Bild- oder Pixelanalyse vorgesehen ist.

Messpunkte werden insbesondere auf den jeweiligen Zahnflanken einer Verzahnung mit einem Abstand zu Randbereichen der jeweiligen Zahnflanken erfasst.

Es kann vorgesehen sein, dass eine optische Achse des optischen Abstandssensors während der Erfassung eines Messpunkts auf einer Zahnflanke einen Winkel mit der Zahnflanke einschließt, der ungleich 90° ist. Mit anderen Worten kann vorgesehen sein, dass eine von dem Messpunkt ausgehende Normale auf der Zahnflanke nicht kollinear zu der optischen Achse orientiert ist.

Es kann vorgesehen sein, dass auf einer jeweiligen Zahnflanke mehrere Messpunkte entlang einer Zahnbreite, d.h. in Flankenlinienrichtung, erfasst werden. Es kann vorgesehen sein, dass auf einer jeweiligen Zahnflanke mehrere Messpunkte entlang einer Zahnbreite, d.h. in Flankenlinienrichtung, als Einzelmesspunkte erfasst werden, wobei insbesondere ein erster Einzelmesspunkt in Flankenlinienrichtung zeitlich vor einem zweiten Einzelmesspunkt in Flankenlinienrichtung erfasst wird.

Die Begriffe Zahnflanke und Flanke werden vorliegend synonym verwendet.

Die Koordinatenmessmaschine kann insbesondere eine Verzahnungsmessmaschine sein. Die Verzahnungsmessmaschine kann dazu eingerichtet sein, anhand von Abweichungen einer gemessenen Verzahnung von einer vorgegebenen Verzahnungssollgeometrie Korrekturparameter für eine Verzahnmaschine, wie eine Verzahnungsschleifmaschine und/oder eine Verzahnungsfräsmaschine bereitzustellen.

Die Koordinatenmessmaschine kann eine taktile Messeinrichtung mit einem Messtaster zum Erfassen von Messpunkten an dem zu messenden Werkstück aufweisen. Die Koordinatenmessmaschine kann somit zusätzlich zu dem optischen Abstandssensor ein taktiles Messsystem zur taktilen Verzahnungsmessung aufweisen.

Die Koordinatenmessmaschine kann dadurch gekennzeichnet sein, dass eine simulierte Lichtquelle vorgesehen ist, dass eine Schalteinrichtung vorgesehen ist, um den Laser der Lichtquelle ein- und auszuschalten oder zu pulsen und dass die simulierte Lichtquelle dazu eingerichtet ist, für den Fall, dass der Laser ausgeschaltet ist oder im Pulsbetrieb ist, Betriebsparameter der Lichtquelle zu simulieren und an die Einrichtung zur aktiven Regelung der Lichtstärke und/oder die Einrichtung zur aktiven Regelung der Temperatur zu übergeben.

Die Regelung der Lichtstärke kann insbesondere durch ein kurzeitiges, wechselndes Ein- und Ausschalten des Lasers erfolgen, d.h. durch ein sogenanntes Pulsen. Um hierbei eine zu starke Regelantwort der Einrichtung zur aktiven Regelung der Lichtstärke und/oder der Einrichtung zur aktiven Regelung der Temperatur zu vermeiden, können der Einrichtung zur aktiven Regelung der Lichtstärke und/oder die Einrichtung zur aktiven Regelung der Temperatur simulierte Betriebsparameter übergeben werden, so dass es für die Einrichtung zur aktiven Regelung der Lichtstärke und/oder die Einrichtung zur aktiven Regelung der Temperatur den Anschein hat, dass der Laser dauerhaft eingeschaltet ist. Die voranstehenden Ausführungen lassen sich gleichermaßen auf den Fall übertragen, dass zwei oder mehr Laser vorgesehen sind, wobei dann zwei oder mehr Laser gepulst werden, und die simulierte Lichtquelle simulierte Betriebsparameter der Lichtquelle erzeugt.

Die simulierte Lichtquelle kann durch eine elektrische Schaltung bereitgestellt werden, die die elektrischen Eigenschaften der Lichtquelle simuliert jedoch selbst nicht leuchtet.

So können mittels der elektrischen Schaltung beispielsweise simulierte Sensorsignale erzeugt und an die Einrichtung zur aktiven Regelung der Lichtstärke und/oder die Einrichtung zur aktiven Regelung der Temperatur übergeben werden, deren Werte denjenigen Sensorsignalen entsprechen, die im Betrieb mit eingeschalteter Lichtquelle an die Einrichtung zur aktiven Regelung der Lichtstärke und/oder die Einrichtung zur aktiven Regelung der Temperatur übergeben werden würden. Demnach hat es für die Einrichtung zur aktiven Regelung der Lichtstärke und/oder die Einrichtung zur aktiven Regelung der Temperatur weiterhin den Anschein, dass die Lichtquelle eingeschaltet ist. Die simulierte Lichtquelle kann daher beispielsweise auf Signalebene erzeugt werden.

Alternativ kann die simulierte Lichtquelle softwarebasiert bereitgestellt werden. Mit dem Ausschalten der Lichtquelle und/oder im Pulsbetrieb der Lichtquelle kann softwarebasiert eine simulierte Lichtquelle "aktiviert" werden. Dabei kann beispielsweise vorgesehen sein, dass die Einrichtung zur aktiven Regelung der Lichtstärke und/oder die Einrichtung zur aktiven Regelung der Temperatur trotz veränderter Sensordaten keine veränderten Stellgrößen erzeugen. In diesem Fall werden daher keine simulierten Signale auf der Signalebene erzeugt, um den Anschein eines durchgehenden Betriebs der Lichtquelle für die aktiven Regelung der Lichtstärke und/oder die Einrichtung zur aktiven Regelung der Temperatur zu erzeugen, sondern die in der Steuerungssoftware verarbeiteten Eingangsdaten der Sensoren werden überschrieben und durch Werte ersetzt, die einen durchgehenden Betrieb der Lichtquelle widerspiegeln.

Alternativ kann vorgesehen sein, dass der Regelbetrieb der Einrichtung zur aktiven Regelung der Lichtstärke und/oder der Einrichtung zur aktiven Regelung der Temperatur für den Fall des Ausschaltens und wieder Einschaltens der Lichtquelle oder für den Fall des Pulsbetriebs jeweils "eingefroren" wird, und die Einrichtung zur aktiven Regelung der Lichtstärke und/oder die Einrichtung zur aktiven Regelung der Temperatur für eine vorgegebene Zeitspanne mit unveränderten Betriebsparametern weiterbetrieben wird - und zwar unabhängig von veränderten Eingangssignalen.

Es kann vorgesehen sein, dass die Koordinatenmessmaschine drei oder mehr Linearachsen aufweist.

Es kann vorgesehen sein, dass die Koordinatenmessmaschine genau drei Linearachsen und genau eine Rotationsachse aufweist.

Es kann vorgesehen sein, dass der optische Abstandssensor mittels der Linearachsen translatorisch bewegbar ist und dass die Rotationsachse zum Aufnehmen und Rotieren eines Bauteils um eine Längsachse bzw. Rotationsachse eingerichtet ist.

Die Begriffe "Bauteil" und "Werkstück" werden im vorliegenden Text synonym verwendet.

Die Koordinatenmessvorrichtung kann dazu eingerichtet sein, das Bauteil während des Erfassens der Messpunkte relativ zu dem optischen Abstandssensor zu bewegen. Insbesondere kann das Bauteil um eine Achse rotiert werden. Insbesondere kann das Bauteil um eine Achse rotiert werden, während der optische Abstandssensor feststeht und/oder mittels einer oder mehrerer Linearachsen bewegt wird.

Die Koordinatenmessvorrichtung kann dazu eingerichtet sein, das Bauteil während des Erfassens der Messpunkte relativ zu dem optischen Abstandssensor kontinuierlich zu bewegen. Insbesondere kann das Bauteil kontinuierlich um eine Achse rotiert werden, während der optische Abstandssensor feststeht und/oder mittels einer oder mehrerer Linearachsen verschoben wird.

Die vorliegende Offenbarung beschreibt eine Lichtquelle, mit einem auf einer Trägerplatine aufgebrachten Leuchtmittel, das ein Material aufweist, das unter Anregung breitbandiges Licht emittiert, wie Phosphor oder dergleichen, mit einem Laser zum Anregen des Leuchtmittels mittels Laserlicht, mit einer Einrichtung zur aktiven Regelung der Lichtstärke eines von der Lichtquelle erzeugten Quelllichts, mit einer Einrichtung zur aktiven Regelung einer Temperatur innerhalb der Lichtquelle, mit einer Optik und mit einen Lichtleiter, der mit einem optischen Abstandssensor koppelbar ist, oder mit einem Ausgang zum Anschließen eines Lichtleiters, wobei die Optik zum Fokussieren des Quelllichts in den Lichtleiter oder den Ausgang eingerichtet ist.

Es hat sich gezeigt, dass sich durch die Kombination einer aktiven Regelung der Temperatur mit einer aktiven Regelung der Lichtstärke eine besonders stabile, breitbandige und spektral homogene Lichtquelle angeben lässt, die für eine Verzahnungsmessung mit einem optischen Abstandssensor besonders gut geeignet ist.

Alle zuvor mit Bezug zur Lichtquelle der Koordinatenmessmaschine beschriebenen Merkmale können gleichermaßen auch für die offenbarte Lichtquelle gelten bzw. können Teil der offenbarten Lichtquelle sein.

Gemäß einem weiteren Aspekt der Erfindung wird ein Verfahren angeben, mit den Verfahrensschritten: Bereitstellen einer erfindungsgemäßen Koordinatenmessmaschine; Aktive Regelung der Lichtstärke des von der Lichtquelle erzeugten Quelllichts und aktive Regelung der Temperatur innerhalb der Lichtquelle.

Es kann vorgesehen sein, dass eine simulierte Lichtquelle, für den Fall, dass der Laser ausgeschaltet ist, Betriebsparameter der Lichtquelle simuliert und an die Einrichtung zur aktiven Regelung der Lichtstärke der Lichtquelle und/oder die Einrichtung zur aktiven Regelung der Temperatur übergibt.

Nachfolgend wird die Erfindung anhand einer Ausführungsbeispiele darstellenden Zeichnung näher beschrieben. Es zeigen jeweils schematisch
- Fig. 1: eine erfindungsgemäße Koordinatenmessmaschine;
- Fig. 2: eine Lichtquelle.

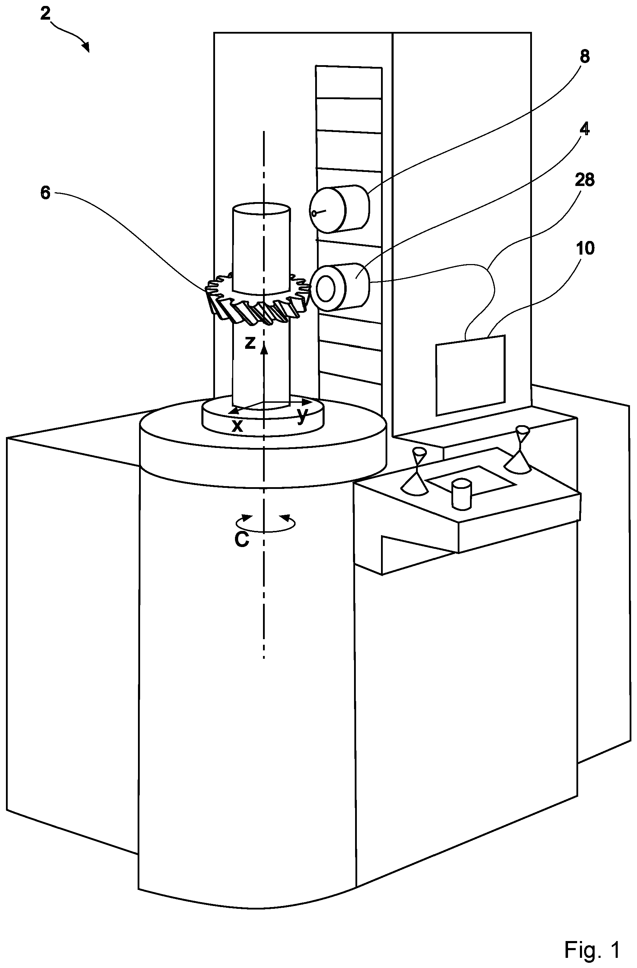

Fig. 1 zeigt eine erfindungsgemäße Koordinatenmessmaschine 2.

Die Koordinatenmessmaschine 2 hat drei Linearachsen x, y und z und eine Rotationsachse C. Die Bezugszeichen x, y, z mit ihren zugeordneten Pfeilen repräsentieren in der Zeichnung sowohl ein kartesisches Koordinatensystem als auch CNC-gesteuerte Linearachsen und deren jeweiliger translatorischer Freiheitsgrad zum Ausführen relativer Messbewegungen. Gleiches gilt für die Rotationsachse mit dem Bezugszeichen C, wobei das Bezugszeichen C sowohl einen rotatorischen Freiheitsgrad zum Ausführen relativer Messbewegungen als auch einen CNC-gesteuerten Drehantrieb repräsentiert.

Die Koordinatenmessmaschine 2 hat einen optischen Abstandssensor 4 zum optischen Erfassen von Messpunkten an einem zu messenden Werkstück 6.

Die Koordinatenmessmaschine 2 hat einen Messtaster 8 zum taktilen Erfassen von Messpunkten an dem zu messenden Werkstück 6. Das zu messende Werkstück 6 ist eine Verzahnung. Die Koordinatenmessmaschine 2 ist eine Verzahnungsmessmaschine.

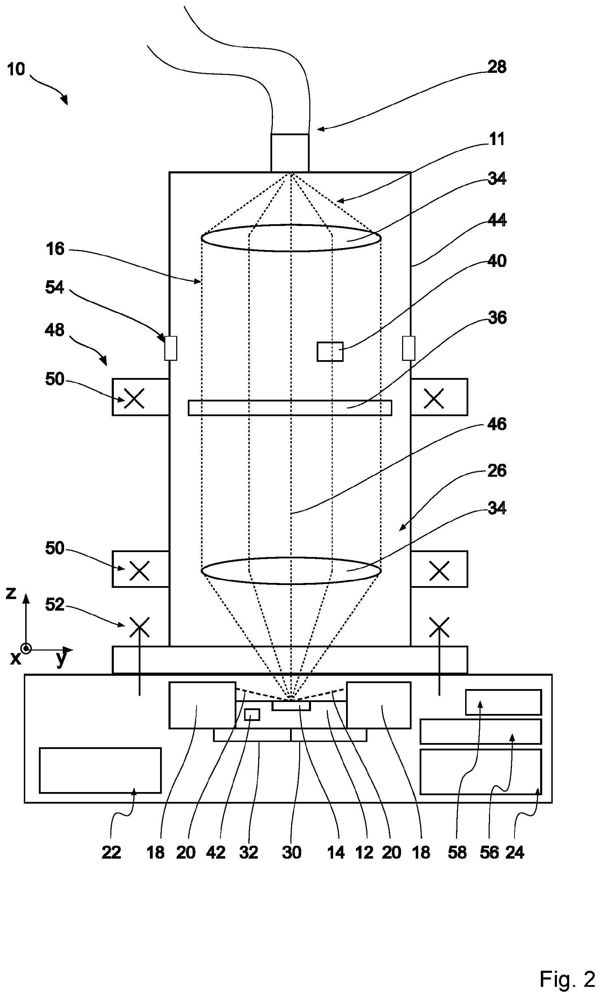

Die Koordinatenmessmaschine 2 hat eine Lichtquelle 10 zum Bereitstellen von Quelllicht 11 für den optischen Abstandssensor 4. Die Lichtquelle 10 wird nachfolgend mit Bezug zu Fig. 2 beschrieben.

Die Lichtquelle 10 weist ein auf einer Trägerplatine 12 aufgebrachtes Leuchtmittel 14 auf, das ein Material aufweist, wie Phosphor oder dergleichen, das unter Anregung breitbandiges Licht 16 emittiert, insbesondere Weißlicht emittiert.

Die Lichtquelle 10 hat zwei Laser 18 zum Anregen des Leuchtmittels 14 mittels Laserlicht 20.

Die Lichtquelle 10 hat eine Einrichtung 22 zur aktiven Regelung der Lichtstärke des von der Lichtquelle 10 erzeugten Quelllichts 11. Die Einrichtung 22 regelt hierzu die Leistung der Laser 18 und damit den Energieeintrag der Laser 18 in das Leuchtmittel 14.

Die Lichtquelle 10 hat eine Einrichtung 24 zur aktiven Regelung einer Temperatur innerhalb der Lichtquelle 10 - und zwar vorliegend zur aktiven Regelung einer Temperatur der Trägerplatine 12.

Die Lichtquelle 10 hat eine Optik 26 und einen Lichtleiter 28, wobei die Optik 26 zum Fokussieren des Quelllichts 11 in den Lichtleiter 28 eingerichtet ist. Der Lichtleiter 28 ist mit dem optischen Abstandssensor 4 gekoppelt (Fig. 1).

Die Einrichtung 24 zur aktiven Regelung der Temperatur weist eine Heizeinrichtung 30 auf. Die Heizeinrichtung 30 ist ein thermoelektrisches Element.

Die Einrichtung 24 zur aktiven Regelung der Temperatur weist eine aktive Kühleinrichtung 32 auf.

Gemäß alternativer Ausgestaltungen kann vorgesehen sein, dass die Einrichtung 24 zur aktiven Regelung der Temperatur ein thermoelektrisches Element ist, das eine Heizeinichtung und eine Kühleinrichtung ist, und zwar ein Peltier-Element.

Die Optik 26 weist zwei asphärische Linsen 34 auf.

Zwischen den Linsen 34 ist ein Filterelement 36 angeordnet.

Das Filterelement 36 ist ein Langpassfilter, wobei der Langpassfilter durchlässig für Wellenlängen größer 475 Nanometer (nm) ist. Das Laserlicht 20, das vorliegend eine Wellenlänge von 450 Nanometer (nm) hat, wird daher im Wesentlichen vollständig herausgefiltert. Demnach gelang vorliegend nur von dem Leuchtmittel 14 emittiertes Licht 16 als Quelllicht 11 in den Lichtleiter 28. Gemäß alternativer Ausführungsbeispiele kann vorgesehen sein, dass eine Kombination aus Laserlicht 20 und emittiertem Licht 16 als Quelllicht 11 in den Lichtleiter 28 fokussiert wird.

Die Lichtquelle 10 hat einen Lichtsensor 40 zum Messen der Lichtstärke des erzeugten Quelllichts 11. Der Lichtsensor 40 ist eine Photodiode. Der Lichtsensor 40 ist zwischen den Linsen 34 angeordnet.

Die Einrichtung 22 zur Regelung der Lichtstärke verwendet die mittels des Lichtsensors 40 gemessene Lichtstärke als Messwert zur Einstellung bzw. Regelung der Leistung der Laser 18.

Die Lichtquelle 10 hat einen Temperatursensor 42 zum Messen der Temperatur der Trägerplatine 12. Die Einrichtung 24 zur Regelung der Temperatur der Trägerplatine 12 verwendet die mittels des Temperatursensors 42 gemessene Temperatur zur Regelung der aktiven Heizeinrichtung 30 und der aktiven Kühleinrichtung 32.

Der Lichtleiter 28 ist lösbar und austauschbar an einem die Optik 26 aufnehmenden Gehäuse 44 befestigt ist, und zwar mittels einer Steckverbindung.

Die Optik 26 ist relativ zu dem Leuchtmittel 14 verschiebbar, und zwar in einer Richtung quer zu einer optischen Achse 46 der Optik 26 verschiebbar. Hierzu weist die Lichtquelle 10 eine mechanische Stelleinrichtung 48 zum Einstellen einer relativen Position zwischen der Optik 26 und dem Leuchtmittel 14 auf. Die mechanische Stelleinrichtung 48 weist Mikrometerschrauben 50, 52 auf.

Erste Mikrometerschrauben 50 dienen zum Einstellen einer relativen Position zwischen der Optik 26 und dem Leuchtmittel 14 in einer ersten Richtung x.

Zweite Mikrometerschrauben 52 dienen zum Einstellen einer relativen Position zwischen der Optik 26 und dem Leuchtmittel 14 in einer zweiten Richtung y. Die erste Richtung x ist orthogonal zur zweiten Richtung y orientiert.

Die Lichtquelle 10 hat eine Einrichtung zur Fokuseinstellung der Optik 26, wobei die Einrichtung zur Fokuseinstellung mechanisch ausgestaltet ist und ein Einstellgewinde 54 aufweist. Das Einstellgewinde 54 ist dazu eingerichtet, eine Rotation in eine translatorische Fokusverschiebung entlang der optischen Achse 46, d.h. in z-Richtung, umzusetzen.

Die Lichtquelle 10 ist eine breitbandige Weißlichtquelle, wobei die Lichtquelle dazu eingerichtet ist, Quelllicht mit einer Bandbreite von mehr als 20 Nanometer (nm) zu erzeugen und wobei die Lichtquelle dazu eingerichtet ist, Wellenlängen größer 400 Nanometer (nm) und kleiner 700 Nanometer (nm) zu erzeugen.

Der Abstandssensor 4 ist ein konfokal chromatischer Abstandssensor.

Die Lichtquelle 10 hat eine simulierte Lichtquelle 56. Die simulierte Lichtquelle 56 ist eine elektrische Schaltung, die die elektrischen Eigenschaften der Lichtquelle 10 simuliert jedoch selbst nicht leuchtet.

Die Lichtquelle 10 hat eine Schalteinrichtung 58, die dazu vorgesehen ist, die Laser 18 der Lichtquelle 10 ein- und auszuschalten - und zwar vorliegend zu pulsen.

Die simulierte Lichtquelle 56 ist dazu eingerichtet ist, für den Fall, dass die Laser 18 ausgeschaltet sind bzw. während des Pulsbetriebs, Betriebsparameter der Lichtquelle 10 zu simulieren und an die Einrichtung 22 zur aktiven Regelung der Lichtstärke der Lichtquelle 10 und die Einrichtung 24 zur aktiven Regelung der Temperatur innerhalb der Lichtquelle 10 zu übergeben.

### Bezugszeichen

- 2: Koordinatenmessmaschine
- 4: Abstandssensor
- 6: Werkstück / Bauteil / Zahnrad
- 8: Messtaster
- 10: Lichtquelle
- 11: Quelllicht
- 12: Trägerplatine
- 14: Leuchtmittel
- 16: breitbandiges Licht / emittiertes Licht
- 18: Laser
- 20: Laserlicht
- 22: Einrichtung zur aktiven Regelung der Lichtstärke
- 24: Einrichtung zur aktiven Regelung der Temperatur
- 26: Optik
- 28: Lichtleiter
- 30: Heizeinrichtung
- 32: Kühleinrichtung
- 34: Linse
- 36: Filterelement
- 40: Lichtsensor
- 42: Temperatursensor
- 44: Gehäuse
- 46: optische Achse
- 48: mechanische Stelleinrichtung
- 50: Mikrometerschraube
- 52: Mikrometerschraube
- 54: Einstellgewinde
- 56: simulierte Lichtquelle
- 58: Schalteinrichtung
- x: Koordinatenachse / NC-Achse / translatorischer Freiheitsgrad
- y: Koordinatenachse / NC-Achse / translatorischer Freiheitsgrad
- z: Koordinatenachse / NC-Achse / translatorischer Freiheitsgrad
- C: Rotationsachse / NC-Achse / rotatorischer Freiheitsgrad

## Patentansprüche

1. Koordinatenmessmaschine,
- mit zwei oder mehr Linearachsen (x, y, z),
- mit einer Rotationsachse (C),
- mit einem optischen Abstandssensor (4) zum Erfassen von Messpunkten an einem zu messenden Werkstück (6) und
- mit einer Lichtquelle (10),
- wobei die Linearachsen (x, y, z) und die Rotationsachse (C) zum Ausführen von Relativbewegungen zwischen dem zu messenden Werkstück (6) und dem optischen Abstandssensor (4) eingerichtet sind,
- wobei die Lichtquelle (10) zum Bereitstellen von Quelllicht (11) für den optischen Abstandssensor (4) eingerichtet ist und
- wobei die Lichtquelle (10) aufweist:
- ein auf einer Trägerplatine (12) aufgebrachtes Leuchtmittel (14), das ein Material aufweist, das unter Anregung breitbandiges Licht emittiert, wie Phosphor oder dergleichen,
- einen Laser (18) zum Anregen des Leuchtmittels (14) mittels Laserlicht (20),
- eine Einrichtung (22) zur aktiven Regelung der Lichtstärke des von der Lichtquelle (10) erzeugten Quelllichts (11),
- eine Einrichtung (24) zur aktiven Regelung einer Temperatur innerhalb der Lichtquelle (10),
- eine Optik (26) und
- einen Lichtleiter (28),
- wobei die Optik (26) zum Fokussieren des Quelllichts (11) in den Lichtleiter (28) eingerichtet ist und
- wobei der Lichtleiter (28) mit dem optischen Abstandssensor (4) gekoppelt ist.

2. Koordinatenmessmaschine nach Anspruch 1,
**dadurch gekennzeichnet, dass**
- die Einrichtung (24) zur aktiven Regelung der Temperatur eine Heizeinrichtung (30) aufweist, wie ein thermoelektrisches Element oder dergleichen,
und/oder
- die Einrichtung (24) zur aktiven Regelung der Temperatur eine Kühleinrichtung (32) aufweist, insbesondere, dass die Einrichtung zur aktiven Regelung der Temperatur eine aktive Kühleinrichtung aufweist, wie einen Kühlkreislauf mit einem Kühlmedium, einen Lüfter oder dergleichen,
und/oder
- dass die Einrichtung zur aktiven Regelung der Temperatur eine passive Kühleinrichtung aufweist, wie Kühllamellen oder dergleichen
und/oder
- dass die Einrichtung (24) zur aktiven Regelung der Temperatur ein thermoelektrisches Element aufweist, das eine Heizeinrichtung und eine Kühleinrichtung ist, wie ein Peltier-Element oder dergleichen.

3. Koordinatenmessmaschine nach einem der voranstehenden Ansprüche,
**dadurch gekennzeichnet, dass**
- die Optik (26) zwei Linsen (34) aufweist, insbesondere zwei asphärische Linsen (34) aufweist,
und/oder
- die Optik (26) ein Filterelement (36) aufweist, wobei das Filterelement (36) insbesondere ein Langpassfilter (36) ist, wobei der Langpassfilter (36) insbesondere durchlässig für Wellenlängen größer 475 nm ist und wobei das Filterelement (36) insbesondere zwischen den Linsen (34) angeordnet ist.

4. Koordinatenmessmaschine nach einem der voranstehenden Ansprüche,
**dadurch gekennzeichnet, dass**
ein Lichtsensor (40) zum Messen einer Lichtstärke des erzeugten Quelllichts (11) vorgesehen ist, wie eine Photodiode (40) oder dergleichen.

5. Koordinatenmessmaschine nach Anspruch 3 und nach Anspruch 4,
**dadurch gekennzeichnet, dass**
der Lichtsensor (40) zwischen den Linsen (34) angeordnet ist.

6. Koordinatenmessmaschine nach einem der voranstehenden Ansprüche,
**dadurch gekennzeichnet, dass**
das Laserlicht (20) eine Wellenlänge aufweist, die kleiner als 500 nm ist, insbesondere eine Wellenlänge aufweist, die 450 nm beträgt.

7. Koordinatenmessmaschine nach einem der voranstehenden Ansprüche,
**dadurch gekennzeichnet, dass**
- ein Temperatursensor (42) zum Messen einer Temperatur vorgesehen ist, insbesondere zum Messen der Temperatur des Leuchtmittels (14) und/oder der Trägerplatine (12) und/oder des Lasers (18),
und/oder
- der Lichtleiter (28) lösbar und austauschbar an einem die Optik (26) aufnehmenden Gehäuse (44) befestigt ist, insbesondere mittels einer Steckverbindung an dem Gehäuse (44) befestigt ist.

8. Koordinatenmessmaschine nach einem der voranstehenden Ansprüche,
**dadurch gekennzeichnet, dass**
die Optik (26) relativ zu dem Leuchtmittel (14) verschiebbar ist, insbesondere in einer Richtung quer zu einer optischen Achse (46) der Optik (26) verschiebbar ist.

9. Koordinatenmessmaschine nach einem der voranstehenden Ansprüche,
**dadurch gekennzeichnet, dass**
- eine mechanische Stelleinrichtung (48) zum Einstellen einer relativen Position zwischen der Optik (26) und dem Leuchtmittel (14) vorgesehen ist,
- insbesondere, dass die mechanische Stelleinrichtung (48) insbesondere zwei oder mehr Mikrometerschrauben (50, 52) aufweist, wobei insbesondere
- mindestens eine erste Mikrometerschraube (50) der zwei oder mehr Mikrometerschrauben (50, 52) zum Einstellen einer relativen Position zwischen der Optik (26) und dem Leuchtmittel (14) in einer ersten Richtung (x) eingerichtet ist, wobei insbesondere mindestens eine zweite Mikrometerschraube (52) der zwei oder mehr Mikrometerschrauben (50, 52) zum Einstellen einer relativen Position zwischen der Optik (26) und dem Leuchtmittel (14) in einer zweiten Richtung (y) eingerichtet ist und
- die erste Richtung (x) insbesondere orthogonal zur zweiten Richtung (y) orientiert ist.

10. Koordinatenmessmaschine nach einem der voranstehenden Ansprüche,
**dadurch gekennzeichnet, dass**
- eine Einrichtung zur Fokuseinstellung der Optik vorgesehen ist, wobei die Einrichtung zur Fokuseinstellung insbesondere mechanisch ausgestaltet ist und ein Einstellgewinde (54) aufweist,
- wobei das Einstellgewinde (54) dazu eingerichtet ist, eine Rotation in eine translatorische Fokusverschiebung umzusetzen.

11. Koordinatenmessmaschine nach einem der voranstehenden Ansprüche,
**dadurch gekennzeichnet, dass**
- ein Zähler zum Zählen von aktiven Betriebsstunden der Lichtquelle (10) vorgesehen ist
und/oder
- ein weiterer Laser (18) zum Anregen des Leuchtmittels (14) mittels Laserlicht (20) vorgesehen ist
und/oder
- der Abstandssensor (4) ein konfokal chromatischer Abstandssensor (4) ist
und/oder
- eine taktile Messeinrichtung (8) mit einem Messtaster zum Erfassen von Messpunkten an dem zu messenden Werkstück (6) vorgesehen ist
und/oder
- die Lichtquelle (10) eine breitbandige Weißlichtquelle ist, wobei die Lichtquelle (10) dazu eingerichtet ist, Quelllicht mit einer Bandbreite von mehr als 20 nm zu erzeugen und wobei die Lichtquelle (10) dazu eingerichtet ist, Wellenlängen größer 400 nm und kleiner 700 nm zu erzeugen.

12. Koordinatenmessmaschine nach einem der voranstehenden Ansprüche,
**dadurch gekennzeichnet,**
- **dass** eine simulierte Lichtquelle (56) vorgesehen ist,
- **dass** eine Schalteinrichtung (58) vorgesehen ist, um den Laser (18) der Lichtquelle (10) ein- und auszuschalten oder zu pulsen und
- **dass** die simulierte Lichtquelle (56) dazu eingerichtet ist, für den Fall, dass der Laser (18) ausgeschaltet ist oder im Pulsbetrieb ist, Betriebsparameter der Lichtquelle (10) zu simulieren und an die Einrichtung (22) zur aktiven Regelung der Lichtstärke und/oder an die Einrichtung (24) zur aktiven Regelung der Temperatur zu übergeben.

13. Verfahren, mit den Verfahrensschritten,
- Bereitstellen einer Koordinatenmessmaschine nach einem der Ansprüche 1 - 12;
- Aktive Regelung der Lichtstärke des von der Lichtquelle (10) erzeugten Quelllichts (11) und
- Aktive Regelung der Temperatur innerhalb der Lichtquelle (10).

14. Verfahren, nach Anspruch 13 und nach Anspruch 12,
**dadurch gekennzeichnet, dass**
- die simulierte Lichtquelle, für den Fall, dass der Laser (18) ausgeschaltet oder im Pulsbetrieb ist, Betriebsparameter der Lichtquelle simuliert und an die Einrichtung (22) zur aktiven Regelung der Lichtstärke und/oder die Einrichtung (24) zur aktiven Regelung der Temperatur übergibt.

## Claims

1. Coordinate measuring machine,
- having two or more linear axes (x, y, z),
- having a rotational axis (C),
- having an optical distance sensor (4) for detecting measuring points on a workpiece (6) to be measured, and
- having a light source (10),
- wherein the linear axes (x, y, z) and the rotational axis (C) are adapted to carry out relative movements between the workpiece (6) to be measured and the optical distance sensor (4),
- wherein the light source (10) is adapted to provide source light (11) for the optical distance sensor (4) and
- wherein the light source (10) comprises:
- an illuminant (14) mounted on a carrier board (12) and comprising a material which emits broadband light under excitation, such as phosphorus or the like,
- a laser (18) for exciting the illuminant (14) by means of laser light (20),
- a device (22) for actively regulating the light intensity of the source light (11) generated by the light source (10),
- a device (24) for actively regulating a temperature within the light source (10),
- an optical system (26), and
- a light guide (28),
- wherein the optical system (26) is adapted to focus the source light (11) into the light guide (28), and
- wherein the light guide (28) is coupled to the optical distance sensor (4).

2. Coordinate measuring machine according to claim 1,
**characterized in that**
- the device (24) for actively regulating the temperature comprises a heating device (30), such as a thermoelectric element or the like,
and/or
- the device (24) for actively regulating the temperature comprises a cooling device (32), in particular **in that** the device for actively regulating the temperature comprises an active cooling device, such as a cooling circuit with a cooling medium, a fan or the like,
and/or
- **in that** the device for actively regulating the temperature comprises a passive cooling device, such as cooling fins or the like,
and/or
- that the device (24) for actively regulating the temperature comprises a thermoelectric element which is a heating device and a cooling device, such as a Peltier element or the like.

3. Coordinate measuring machine according to one of the preceding claims, **characterized in that**
- the optical system (26) has two lenses (34), in particular two aspherical lenses (34),
and/or
- the optical system (26) has a filter element (36), wherein the filter element (36) is in particular a long-pass filter (36), wherein the long-pass filter (36) is in particular transmissive to wavelengths greater than 475 nm, and the filter element (36) is in particular arranged between the lenses (34).

4. Coordinate measuring machine according to one of the preceding claims,
**characterized in that**
a light sensor (40) for measuring a light intensity of the generated source light (11) is provided, such as a photodiode (40) or the like.

5. Coordinate measuring machine according to claim 3 and according to claim 4,
**characterized in that**
the light sensor (40) is arranged between the lenses (34).

6. Coordinate measuring machine according to one of the preceding claims,
**characterized in that**
the laser light (20) has a wavelength that is less than 500 nm, in particular has a wavelength that is 450 nm.

7. Coordinate measuring machine according to one of the preceding claims,
**characterized in that**
- a temperature sensor (42) is provided for measuring a temperature, in particular for measuring the temperature of the illuminant (14) and/or the carrier board (12) and/or the laser (18),
and/or
- the light guide (28) is detachably and replaceably attached to a housing (44) accommodating the optical system (26), in particular is attached to the housing (44) by means of a plug-in connection.

8. Coordinate measuring machine according to one of the preceding claims,
**characterized in that**
the optical system (26) is displaceable relative to the illuminant (14), in particular displaceable in a direction transverse to an optical axis (46) of the optical system (26).

9. Coordinate measuring machine according to one of the preceding claims,
**characterized in that**
- a mechanical adjusting device (48) is provided for adjusting a relative position between the optical system (26) and the illuminant (14),
- in particular **in that** the mechanical adjusting device (48) comprises in particular two or more micrometer screws (50, 52), wherein in particular
- at least a first micrometer screw (50) of the two or more micrometer screws (50, 52) is adapted to adjust a relative position between the optical system (26) and the illuminant (14) in a first direction (x), wherein in particular at least a second micrometer screw (52) of the two or more micrometer screws (50, 52) is adapted to adjust a relative position between the optical system (26) and the illuminant (14) in a second direction (y), and
- the first direction (x) is in particular oriented orthogonally to the second direction (y).

10. Coordinate measuring machine according to one of the preceding claims,
**characterized in that**
- a device for adjusting the focus of the optical system is provided, wherein the device for adjusting the focus is in particular mechanically designed and has an adjustment thread (54),
- wherein the adjustment thread (54) is adapted to convert a rotation into a translational focus shift.

11. Coordinate measuring machine according to one of the preceding claims,
**characterized in that**
- a counter for counting active operating hours of the light source (10) is provided, and/or
- a further laser (18) is provided for exciting the illuminant (14) by means of laser light (20),
and/or
- the distance sensor (4) is a confocal chromatic distance sensor (4),
and/or
- a tactile measuring device (8) is provided with a measuring probe for detecting measuring points on the workpiece (6) to be measured,
and/or
- the light source (10) is a broadband white light source, wherein the light source (10) is adapted to generate source light having a bandwidth greater than 20 nm, and wherein the light source (10) is adapted to generate wavelengths greater than 400 nm and less than 700 nm.

12. Coordinate measuring machine according to any of the preceding claims,
**characterized**
- **in that** a simulated light source (56) is provided,
- **in that** a switching means (58) is provided to switch the laser (18) of the light source (10) on and off or to pulse it, and
- **in that** the simulated light source (56) is adapted to simulate operating parameters of the light source (10) in case the laser (18) is switched off or is in pulsed operation and to transfer them to the device (22) for actively regulating the light intensity and/or to the device (24) for actively regulating the temperature.

13. Method, having the method steps of
- providing a coordinate measuring machine according to one of claims 1-12;
- actively regulating the light intensity of the source light (10) generated by the light source (11) and
- actively regulating the temperature inside the light source (10).

14. Method, according to claim 13 and according to claim 12,
**characterized in that**
- the simulated light source, in the event the laser (18) is switched off or in pulsed mode, simulates operating parameters of the light source and transmits them to the device (22) for actively regulating the light intensity and/or the device (24) for actively regulating the temperature.

## Revendications

1. Machine de mesure de coordonnées,
- comportant deux ou plusieurs axes linéaires (x, y, z),
- comportant un axe de rotation (C),
- comportant un capteur de distance optique (4) pour détecter des points de mesure sur une pièce à mesurer (6) et
- avec une source lumineuse (10),
- les axes linéaires (x, y, z) et l'axe de rotation (C) étant conçus pour effectuer des mouvements relatifs entre la pièce à mesurer (6) et le capteur de distance optique (4),
- la source lumineuse (10) étant conçue pour fournir une lumière source (11) au capteur de distance optique (4) et
- la source lumineuse (10) comportant :
- un moyen lumineux (14) monté sur une carte support (12), qui comprend un matériau qui émet une lumière à large bande lorsqu'il est excité, tel que du phosphore ou similaire,
- un laser (18) pour exciter le moyen lumineux (14) au moyen d'une lumière laser (20),
- un dispositif (22) pour réguler activement l'intensité lumineuse de la lumière source (11) produite par la source lumineuse (10),
- un dispositif (24) pour réguler activement une température à l'intérieur de la source lumineuse (10),
- une optique (26) et
- un guide de lumière (28),
- l'optique (26) étant conçue pour focaliser la lumière source (11) dans le guide de lumière (28) et
- le guide de lumière (28) étant couplé au capteur de distance optique (4).

2. Machine de mesure de coordonnées selon la revendication 1,
**caractérisée en ce que**
- le dispositif (24) pour la régulation active de la température comprend un dispositif de chauffage (30), tel qu'un élément thermoélectrique ou similaire,
et/ou
- le dispositif (24) pour la régulation active de la température comprend un dispositif de refroidissement (32), en particulier que le dispositif pour la régulation active de la température comprend un dispositif de refroidissement actif, tel qu'un circuit de refroidissement avec un fluide de refroidissement, un ventilateur ou similaire,
et/ou
- le dispositif de régulation active de la température comprend un dispositif de refroidissement passif, tel que des ailettes de refroidissement ou similaire et/ou
- le dispositif (24) de régulation active de la température comprend un élément thermoélectrique qui est un dispositif de chauffage et un dispositif de refroidissement, tel qu'un élément Peltier ou similaire.

3. Machine de mesure de coordonnées selon l'une des revendications précédentes,
**caractérisée en ce que**
- l'optique (26) comporte deux lentilles (34), en particulier deux lentilles asphériques (34),
et/ou
- l'optique (26) comporte un élément filtrant (36), l'élément filtrant (36) étant en particulier un filtre passe-haut (36), le filtre passe-haut (36) étant en particulier transparent pour les longueurs d'onde supérieures à 475 nm et l'élément filtrant (36) étant en particulier disposé entre les lentilles (34).

4. Machine de mesure de coordonnées selon l'une des revendications précédentes,
**caractérisée en ce qu'**
un capteur de lumière (40) est prévu pour mesurer l'intensité lumineuse de la lumière source générée (11), tel qu'une photodiode (40) ou similaire.

5. Machine de mesure de coordonnées selon la revendication 3 et selon la revendication 4,
**caractérisée en ce que**
le capteur de lumière (40) est disposé entre les lentilles (34).

6. Machine de mesure de coordonnées selon l'une des revendications précédentes,
**caractérisée en ce que**
la lumière laser (20) a une longueur d'onde inférieure à 500 nm, en particulier une longueur d'onde de 450 nm.

7. Machine de mesure de coordonnées selon l'une des revendications précédentes,
**caractérisée en ce que**
- un capteur de température (42) est prévu pour mesurer une température, en particulier pour mesurer la température de la source lumineuse (14) et/ou de la carte support (12) et/ou du laser (18),
et/ou
- le guide de lumière (28) est fixé de manière amovible et interchangeable à un boîtier (44) recevant l'optique (26), en particulier au moyen d'une connexion enfichable sur le boîtier (44).

8. Machine de mesure de coordonnées selon l'une des revendications précédentes,
**caractérisée en ce que**
l'optique (26) est déplaçable par rapport à la source lumineuse (14), en particulier dans une direction transversale à un axe optique (46) de l'optique (26).

9. Machine de mesure de coordonnées selon l'une des revendications précédentes,
**caractérisée en ce que**
- un dispositif de réglage mécanique (48) est prévu pour régler une position relative entre l'optique (26) et le moyen d'éclairage (14),
- en particulier que le dispositif de réglage mécanique (48) comporte en particulier deux ou plusieurs vis micrométriques (50, 52), en particulier
- au moins une première vis micrométrique (50) parmi les deux vis micrométriques (50, 52) ou plus est conçue pour régler une position relative entre l'optique (26) et le moyen d'éclairage (14) dans une première direction (x), au moins une deuxième vis micrométrique (52) parmi les deux vis micrométriques (50, 52) ou plus étant notamment (50, 52) étant conçue pour régler une position relative entre l'optique (26) et le moyen d'éclairage (14) dans une deuxième direction (y) et
- la première direction (x) étant orientée en particulier orthogonalement à la deuxième direction (y).

10. Machine de mesure de coordonnées selon l'une des revendications précédentes,
**caractérisée en ce que**
- un dispositif est prévu pour régler la mise au point de l'optique, le dispositif de réglage de la mise au point étant notamment de conception mécanique et comportant un filetage de réglage (54),
- le filetage de réglage (54) étant conçu pour convertir une rotation en un déplacement translationnel de la mise au point.

11. Machine de mesure de coordonnées selon l'une des revendications précédentes,
**caractérisée en ce que**
- un compteur est prévu pour compter les heures de fonctionnement actives de la source lumineuse (10)
et/ou
- un autre laser (18) est prévu pour exciter la source lumineuse (14) au moyen d'une lumière laser (20)
et/ou
- le capteur de distance (4) est un capteur de distance chromatique confocal (4) et/ou
- un dispositif de mesure tactile (8) avec un palpeur de mesure est prévu pour détecter des points de mesure sur la pièce à mesurer (6)
et/ou
- la source lumineuse (10) est une source de lumière blanche à large bande, la source lumineuse (10) étant conçue pour générer une lumière source avec une largeur de bande supérieure à 20 nm et la source lumineuse (10) étant conçue pour générer des longueurs d'onde supérieures à 400 nm et inférieures à 700 nm.

12. Machine de mesure de coordonnées selon l'une des revendications précédentes,
**caractérisée en ce que**
- une source lumineuse simulée (56) est prévue,
- un dispositif de commutation (58) est prévu pour allumer et éteindre ou faire pulser le laser (18) de la source lumineuse (10) et
- que la source lumineuse simulée (56) est conçue pour simuler les paramètres de fonctionnement de la source lumineuse (10) lorsque le laser (18) est éteint ou en mode pulsé, et pour les transmettre au dispositif (22) de régulation active de l'intensité lumineuse et/ou au dispositif (24) de régulation active de la température.

13. Procédé comprenant les étapes suivantes :
- mise à disposition d'une machine de mesure tridimensionnelle selon l'une des revendications 1 à 12 ;
- régulation active de l'intensité lumineuse de la lumière source (11) générée par la source lumineuse (10) et
- régulation active de la température à l'intérieur de la source lumineuse (10).

14. Procédé selon la revendication 13 et selon la revendication 12,
**caractérisé en ce que**
- la source lumineuse simulée, dans le cas où le laser (18) est éteint ou fonctionne en mode pulsé, simule les paramètres de fonctionnement de la source lumineuse et les transmet au dispositif (22) de régulation active de l'intensité lumineuse et/ou au dispositif (24) de régulation active de la température.
